# EUROPÄISCHE PATENTSCHRIFT

(11) **EP 2 582 507 B1**
(45) Veröffentlichungstag und Bekanntmachung des Hinweises auf die Patenterteilung: **30.03.2016**
(21) Anmeldenummer: 11722822.1
(22) Anmeldetag: 01.06.2011
(51) Int. Cl.: B29C 45/17, B29C 45/50, B29C 45/76, F15B 15/08, F15B 15/20

(54) **VERFAHREN UND VORRICHTUNG ZUM BETRIEB EINER ANGETRIEBENEN ACHSE BEI EINER WERKZEUGMASCHINE**
METHOD AND DEVICE FOR OPERATING A DRIVEN SPINDLE IN A MACHINE TOOL
PROCÉDÉ ET DISPOSITIF POUR LE FONCTIONNEMENT D'UN AXE ENTRAÎNÉ DANS UNE MACHINE-OUTIL

(30) Priorität: 18.06.2010 DE 102010024246
(43) Veröffentlichungstag der Anmeldung: 24.04.2013
(73) Patentinhaber: Netstal-Maschinen AG, 8752 Näfels (CH)
(72) Erfinder: NOTZ, Markus, CH-8762 Schwändi (CH)
(74) Vertreter: Wilhelm, Ludwig
(86) Internationale Anmeldenummer: PCT/EP2011/059101
(87) Internationale Veröffentlichungsnummer: WO 2011/157564

(56) Entgegenhaltungen:
- EP-A1- 1 769 898
- WO-A1-2005/110711
- JP-A- 2003 231 153

## Beschreibung

Die vorliegende Erfindung betrifft ein Verfahren zum Betrieb einer angetriebenen Achse bei einer Werkzeugmaschine gemäß dem Oberbegriff des Anspruchs 1 sowie eine Vorrichtung gemäß dem Oberbegriff des Anspruchs 8.

Das Dokument EP-A-1769898 offenbart ein Verfahren gemäß dem Oberbegriff des Anspruchs 1 und eine Vorrichtung gemäß dem Oberbegriff des Anspruchs 8.

Werkzeugmaschinen, darunter auch Spritzgießmaschinen, besitzen zumeist mehrere angetriebene Achsen mit einem teilweise sehr großen und unterschiedlichen Lastbereich. Bei einer Spritzgießmaschine ist beispielsweise der Einspritzprozess, also der Prozess, bei dem die Schmelze in die Kavität des Werkzeugs gefördert wird, der Vorgang mit der variabelsten Anforderung. Dabei muss je nach Anwendung ein extremer Geschwindigkeits- und Druckbereich beherrscht werden. So sind Einspritzgeschwindigkeiten von einigen Zehntel Millimeter pro Sekunde bis zu 1 Meter pro Sekunde gefordert. Im Lastbereich können die Anforderungen von unter 100 bar bis zu über 2.000 bar reichen. Bei extremer Betrachtung variiert der Leistungsbedarf somit um bis zu einen Faktor 20.000. Will man diese Anwendungsbreite mit heute üblichen Antriebsanordnungen abdecken, kann die Leistung zumindest nicht in allen Anwendungsfällen in energetisch optimaler Weise zur Verfügung gestellt werden. So können hohe Leistungsspitzen nur bis zu einer gewissen Leistungsgrenze direkt von einer hydraulischen Pumpe (z.B. Verstell- oder Konstantpumpe) direkt zur Verfügung gestellt werden. Ab einer bestimmten Leistungsgrenze bedarf es einer Zwischenspeicherung (beispielsweise durch einen Hydraulikakkumulator) und dem Abrufen der Leistung aus einer solchen Speicherung.

Aufgabe der vorliegenden Erfindung ist es, einen Gesamtantrieb für eine angetriebene Achse bei einer Werkzeugmaschine sowie ein Verfahren zu dessen Betrieb anzugeben, die bzw. das einen möglichst breiten Leistungsbereich bei einem vorgegebenen Leistungsprofil (z.B. möglichst energieeffizient) abdecken kann.

Diese Aufgabe wird verfahrensmäßig durch die im Anspruch 1 angegebenen Merkmale und vorrichtungsmäßig durch die im Anspruch 8 angegebenen Merkmale gelöst.

Gemäß einem Gedanken der vorliegenden Erfindung werden zumindest zwei unterschiedliche Antriebe zu einem gemeinsamen Wirkantrieb gekoppelt, wobei die Leistungsdaten für jeden Antrieb in Kennwerten oder Kennlinien gespeichert und hinterlegt sind (als Leistungsdaten werden dabei alle Kenn- und Verbrauchsdaten des jeweiligen Antriebs bezeichnet). Vorzugsweise können auch drei oder mehr Antriebe "zusammengeschaltet" sein. Gemäß der Erfindung wird dann die Leistungsanforderung für eine angetriebene Achse ermittelt und ein Leistungsprofil vorgegeben. Als Leistungsprofil kann beispielsweise ein möglichst geringer Energieverbrauch oder ein möglichst geringer Energieverbrauch bei einer bestimmten Mindestdynamik des Gesamtantriebs etc. vorgegeben werden. Auf Basis der Leistungsanforderung wird diejenige Betriebskombination der Antriebe ermittelt, die das vorgegebene Profil (beispielsweise einen möglichst geringen Energieverbrauch) möglichst erfüllt. Die Antriebe werden dann mit der ermittelten Betriebskombination angetrieben.

Gemäß der vorliegenden Erfindung kann man nun Antriebe mit verschiedenen technischen Ausprägungen und Eigenheiten zusammenschalten. Beispielsweise ist es möglich, eine elektrische Maschine als Elektromotor mit einem Hydraulikzylinder zu koppeln, der von einer Hydraulikpumpe und/oder einem hydraulischen Akkumulator angetrieben wird. Die Kombination von Hydraulikzylinder und gekoppelter elektrischer Maschine wirken dann auf die Antriebsachse. Die Pumpe wie auch der Akkumulator beaufschlagen einen Kolben, insbesondere einen doppelwirkenden Kolben (auch Gleichgang- oder Differential-Zylinder), des Hydraulikzylinders, wobei gerade dieser Kolben wiederum mit dem elektrischen Antrieb verbunden ist.

Beim Betrieb des Gesamtantriebs können nun verschiedene Kombinationen der einzelnen, zusammen geschalteten Antriebe realisiert werden. Es kann allein der elektrische Antrieb aktiviert werden und die anderen (hydraulischen) Antriebe können inaktiv bzw. im Leerlaufmodus geschaltet sein. Alternativ kann lediglich die hydraulische Pumpe betrieben und wiederum die anderen Antriebe im Leerlaufmodus geschaltet sein. Gemäß einer dritten Ausgestaltung kann der Akkumulator alleine betätigt werden. Des Weiteren sind jedoch auch kombinierte Antriebe der vorgenannten einzelnen Antriebe möglich, nämlich die Kombination des aktiven Akkumulators mit dem aktiven Motor, oder die Kombination des aktiven Akkumulators mit der aktiven Pumpe und die Kombination des aktiven Motors mit der aktiven Pumpe. In der siebten Ausgestaltung ist auch eine Kombination des aktiven Akkumulators, des aktiven Motors und der aktiven Pumpe gleichzeitig möglich. Damit gibt es sieben unterschiedliche Kombinationsmöglichkeiten hinsichtlich des Antriebs.

Diese Alternativen vervielfältigen sich noch, wenn man Vorkehrungen trifft, dass sowohl die elektrische Maschine als Elektromotor wie auch als Generator und überdies das hydraulische Element nicht nur als Pumpe sondern auch als Hydromotor zu betreiben ist. In diesem Fall gibt es zu der Kombination des aktiven Akkumulators und des aktiven Motors noch zwei Unterkombinationen, zu der Kombination des aktiven Akkumulators und der aktiven Pumpe ebenfalls zwei Unterkombinationen, zu der Kombination des aktiven Motors und der aktiven Pumpe vier Unterkombinationen und zu der Kombination des aktiven Akkumulators, des aktiven Motors und der aktiven Pumpe ebenfalls vier Unterkombinationen, mithin also insgesamt 16 verschiedene Kombinationsmöglichkeiten für den Betrieb des vorgenannt beschriebenen Gesamtantriebes.

Je nach Betriebsweise der elektrischen Maschine und des hydraulischen Elementes, nämlich im jeweiligen Antriebs- oder Regenerativmodus können beim vorliegend beschriebenen Beispiel aus drei Einzelantrieben mit Akkumulator die Kennwerte des Akkumulators gleichsam verschoben werden. Dies wird nachfolgend noch anhand des Ausführungsbeispiels näher beschrieben.

Als Antriebe sind aber neben den genannten Hydraulikakkumulator, Hydraulikpumpen und elektrischen Antrieben noch weitere Antriebe wie Hochmomentmotoren, Liniearantriebe usw. möglich. Je nach Kombination verändert sich die Kombinationsmöglichkeit und Variabilität entsprechend.

Wird die elektrische Maschine, mit der ein Elektromotor realisiert werden kann, auch als Generator antreibbar ausgebildet, so kann im regenerativen Betrieb überschüssige Energie in elektrische Energie umgewandelt und in das System zurückgespeist werden. Gleiches gilt, wenn das hydraulische Element, welches angetrieben als Pumpe wirkt, auch als Hydromotor betrieben wird. Ist dieser Hydromotor mit einer weiteren elektrischen Maschine gekoppelt, welche wiederum als Generator antreibbar ist, so kann ebenfalls elektrische Energie im Regenerativmodus erzeugt und in das System zurückgespeist werden.

Weitere Vorteile und Merkmale sind in den Unteransprüchen definiert.

Die vorliegende Erfindung wird nachfolgend anhand eines konkreten Ausführungsbeispiels und mit Bezug auf die beigefügten Zeichnungen näher erläutert. Die Zeichnungen zeigen in
- Fig. 1: ein schematisches Blockschaltbild einer konkreten Ausgestaltung der vorliegenden Erfindung und
- Fig. 2: eine Grafik zum Beschreiben der unterschiedlichen Systemdruckkennlinien in Abhängigkeit der Regelpumpe, gemäß der konkreten Ausgestaltung nach Fig. 1 bei einer Spritzgießmaschine
- Fig. 3: eine Grafik zum Beschreiben der unterschiedlichen Einspritzkraftkennlinien in Abhängigkeit der elektrischen Maschine, gemäß der konkreten Ausgestaltung nach Fig. 1 bei einer Spritzgießmaschine
- Fig. 4: eine Grafik zum Beschreiben der unterschiedlichen Lastbereiche bei einer Einspritzeinrichtung gemäß der konkreten Ausgestaltung nach Fig. 1 bei einer Spritzgießmaschine.

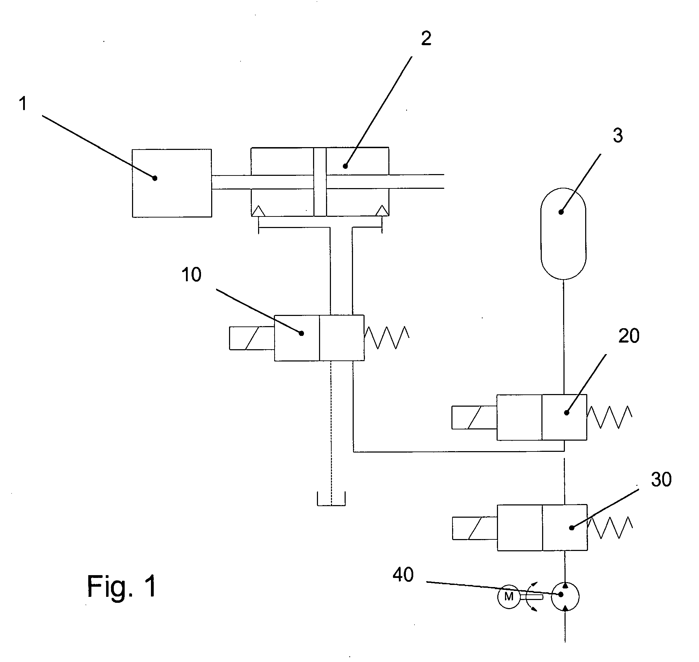

In Fig. 1 ist ein Gesamtantrieb für eine angetriebene Achse, nämlich der Axialantrieb bei einer Einspritzeinheit einer Spritzgießmaschine, bestehend aus drei unterschiedlichen Antriebskomponenten dargestellt.

Dabei ist das (nicht selbst dargestellte) angetriebene Betätigungselement (z.B. die Einspritzschnecke oder der Einspritzkolben) der angetriebenen Achse mit der Kolbenstange eines gezeigten doppelwirkenden Kolbens verbunden, welcher in einem Hydraulikkolben aufgenommen ist und eine hydraulische Kolben-Zylinder-Einheit 2 bildet. Diese weist zwei hydraulische Druckkammern beidseits des doppelwirkenden Kolbens auf. Der Kolben ist vorliegend kraftschlüssig mit der elektrischen Maschine verbunden.

Bei dieser elektrischen Maschine 1 kann es sich um eine als Motor und Generator betreibbaren Einheit aus Stator und Rotor handeln, welche über ein Getriebe (z. B. Zahnstangen-Ritzel-Kombination oder Mutter-Spindel-Kombination) auf die Kolbenstange wirkt und mit dieser wirkverbunden ist.

Die Druckkammern der Kolben-Zylinder-Einheit 2 sind unter Zwischenschaltung eines Ventils (z.B. Proportional-, Servo- oder Schaltventil) 10 mit Druckfluid beaufschlagbar. Das Druckfluid stammt entweder von einer Pumpe 40, die über einen variabel ansteuerbaren Motor angetrieben wird. Überdies kann die Pumpe 40 auch als Hydromotor arbeiten, wobei der mit der Pumpe 40 verbundene Motor dann als Generator fungiert.

Optional kann unter Zwischenschaltung eines weiteren Ventils 30 die Hydraulikpumpe 40 mit dem Ventil 10 verbunden.

Schließlich ist ein hydraulischer Akkumulator 3 vorgesehen, in dem Hydraulikfluid druckgespeichert werden kann. Dieser Akkumulator 3 ist über ein drittes Ventil 20 jeweils mit den Ventilen 30 und 10 verbunden, wie in Fig. 1 dargestellt.

Je nach Stellung der Ventile 10, 20 und 30 sind damit unterschiedliche Verbindungsmöglichkeiten zwischen den Druckkammern der Kolben-Zylinder-Einheit 2, dem Akkumulator 3 und der Pumpe 40 geschaffen. Sind beispielsweise die Ventile 20 und 30 so positioniert, dass der Akkumulator 3 mit der Pumpe strömungsmäßig verbunden ist, könnte zum einen die Pumpe den Akkumulator aufladen oder zum anderen der Akkumulator die Pumpe als Generator antreiben. Bei entsprechend positionierten Ventilen 20 oder 30 einerseits und dem Ventil 10 andererseits kann die Pumpe 40 wahlweise den doppelwirkenden Kolben der Kolben-Zylinder-Einheit 2 antreiben oder aber der Akkumulator 3 aufladen. Sind die Ventile 10, 20 und 30 entsprechend positioniert, können sowohl die Pumpe 40 wie auch der Akkumulator 3 den doppelwirkenden Kolben in die gleiche Richtung gleichzeitig beaufschlagen.

Somit ist es je nach Schaltstellung der Ventile möglich, die nicht dargestellte Einspritzeinheit allein mit der als Elektromotor wirkenden elektrischen Maschine 1, allein mit der Pumpe 40, allein mit dem Akkumulator oder mit einer Kombination von zwei Einzelantrieben oder einer Kombination von allen Einzelantrieben anzutreiben. Zudem können die elektrische Maschine und das hydraulische Element im regenerativen Modus betrieben werden.

Damit ist es möglich, die Leistungsanforderung für die angetriebene Achse, die ermittelt wird, optimal durch eine unterschiedliche Kombination der Einzelantriebe zu erfüllen. Je nach Kombinationsart wird dabei mehr oder weniger Energie verbraucht. Wird beispielsweise beim Akkumulatorbetrieb überschüssige Energie von der als Generator arbeitenden elektrischen Maschine in das System zurückgespeist (z.B. in einen Zwischenkreis), so kann eine Energieverschwendung vermieden und die Effizienz des Antriebs damit erhöht werden. Das System, insbesondere die (vorliegend nicht dargestellte) Steuer- oder Regeleinrichtung, welche die Einzelantriebe entsprechend beaufschlagt, bestimmt die für die Leistungsanforderung entsprechend dem Leistungsprofil günstige Betriebskombination aus den hinterlegten Leistungsdaten. Mit der ermittelten Betriebskombination werden die Einzelantriebe dann entsprechend beaufschlagt oder im regenerativen Modus betrieben.

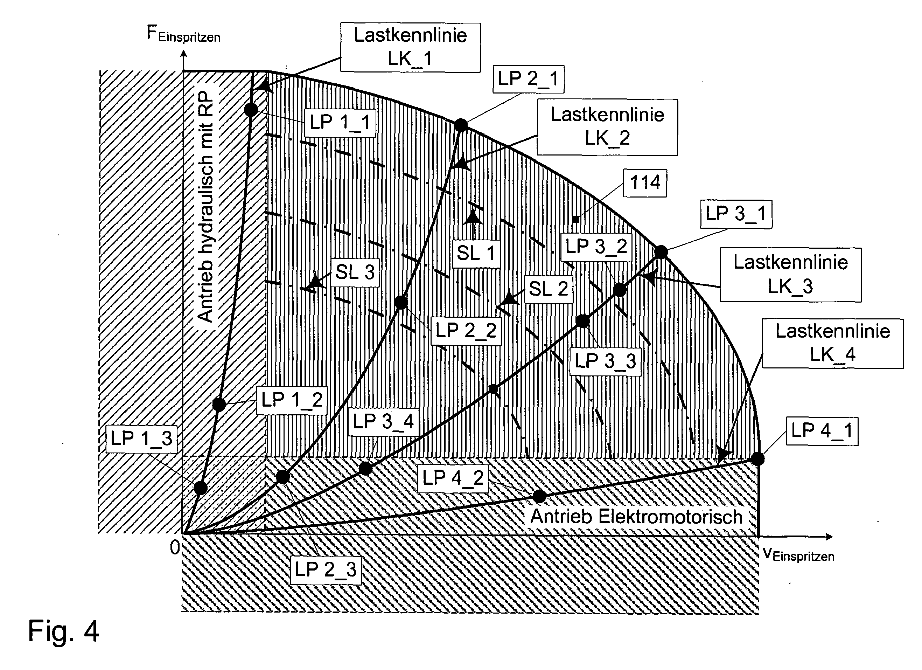

Die Wirkung der Kombination der einzelnen Antriebe hinsichtlich der Abdeckung der Lastpunkte geht aus Fig. 4 genauer hervor. Dabei können die Lastpunkte den Leistungsanforderungen entsprechen.

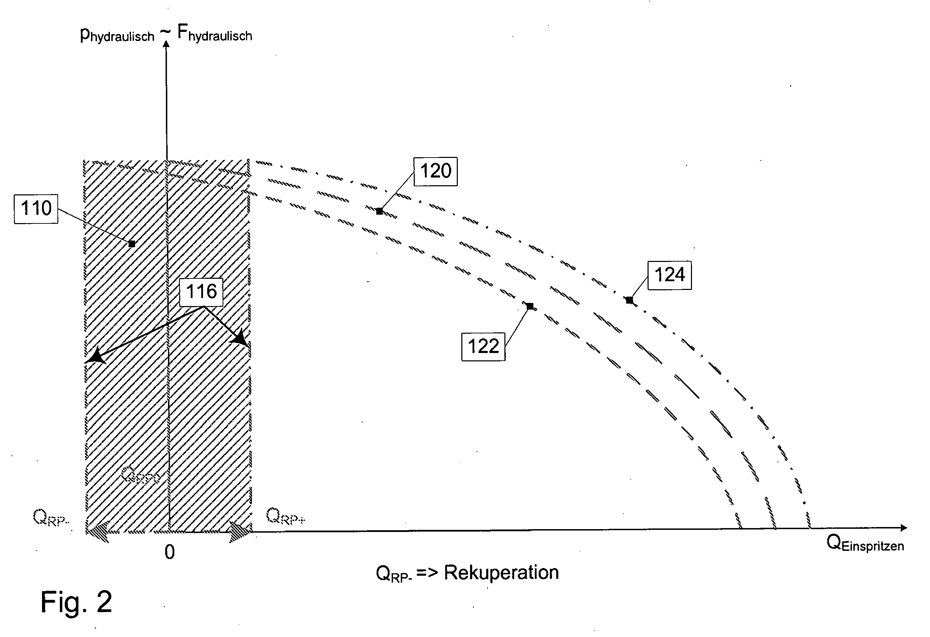

In den Diagrammen Fig. 2, Fig. 3, Fig. 4 ist auf der Abszisse entweder die Einspritzgeschwindigkeit v oder der proportional abhängige Volumenstrom Q und auf der Ordinate die Einspritzkraft F oder der proportional abhängige hydraulische Druck p dargestellt, wobei (in Fig. 4) unterschiedliche Lastpunkte auf den Lastkennlinien LK_1, LK_2, LK_3 und LK_4 eingezeichnet sind. Je nach Bereich des Diagrammes, in den ein Lastpunkt fällt, befindet sich dieser Lastpunkt in einem Bereich, in dem er von einem oder einer Kombination der einzelnen Antriebe (Teilantriebe) aus Fig. 1 abgedeckt werden kann.

So stellt der schraffierte Bereich 110 des Diagramms (Fig. 2) den Bereich dar, der allein durch den Betrieb der Hydraulik- oder Regelpumpe 40 abgedeckt werden könnte. Dabei wird der Lastpunkt LP 1_1 (Fig. 4) durch die Regelpumpe 40 im direkten Betrieb bei vollem Druck abgedeckt. Der benötigte Ölfluss beträgt dabei ca. 90 % der Leistungsfähigkeit der Regelpumpe. Dies markiert die Leistungsgrenze der Regelpumpe 40. Der Durchfluss des Hydraulikfluides kann beispielsweise durch Verstellung eines Schwenkwinkels bei einer entsprechenden Regelpumpe sowie auch durch eine Drehzahlregelung eines antreibenden Elektromotors erreicht werden. Die Energieeffizienz dabei ist sehr gut und zwar sowohl bei einer Regelung über den Schwenkwinkel wie auch bei einer Regelung über die Drehzahl des Elektromotors. Es gibt dabei kaum Drosselverluste.

Der Lastpunkt LP 1_2 (Fig. 4) kann ebenfalls allein durch die Regelpumpe 40 beim direkten Betrieb mit einem reduzierten Druck abgedeckt werden. Dabei liegt der Ölfluss im Bereich von ca. 40 % der Leistung der Regelpumpe. Wiederum kann der reduzierte Durchfluss durch eine Verstellung des Schwenkwinkels sowie auch durch eine Drehzahlreduktion des die Pumpe antreibenden Elektromotors erreicht werden. Dabei können bei der Verstellung des Schwenkwinkels oder bei der Drehzahlreduktion durch den Elektromotor unterschiedliche Energieverbrauchswerte erzielt werden.

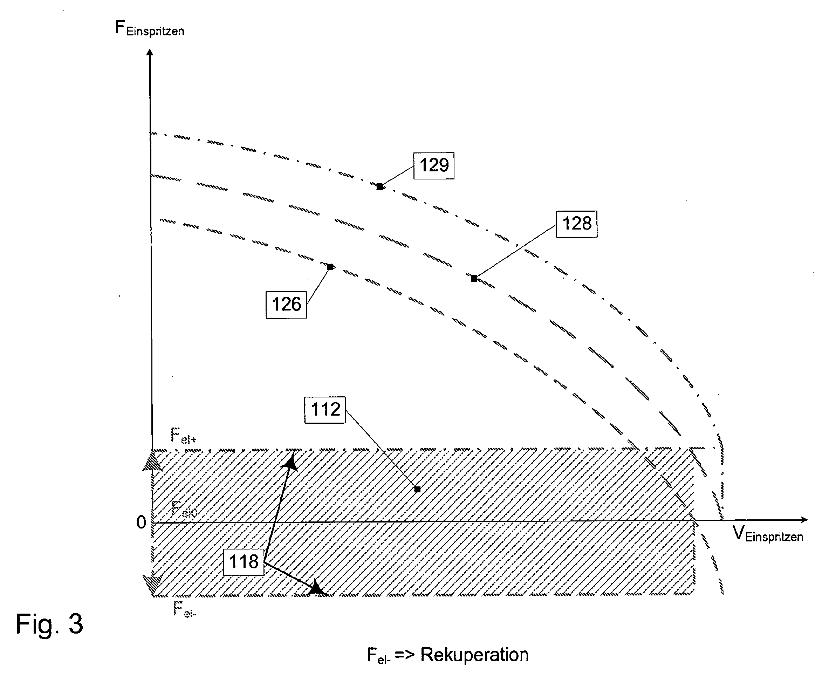

Der schraffierte Bereich 112 (Fig. 3) im Diagramm ist unmittelbar über den Antrieb mittels der als Elektromotor wirkenden, elektrischen Maschine 1 abdeckbar. Dabei ist zu erkennen, dass der Lastpunkt LP 1_3 (Fig. 4) sowohl von der elektrischen Maschine 1 als auch von der Regelpumpe 40 allein abgedeckt werden kann. Einen Effizienzunterschied gibt es dabei kaum.

Die Lastpunkte LP 4_1, LP 4_2, LP 3_4, LP 1_3 und LP 2_3 können durch die elektrische Maschine 1 allein abgedeckt werden.

Bei allen übrigen Lastpunkten muss bei einem Gesamtantrieb gemäß dem Ausführungsbeispiel nach Fig. 1 der Akkumulator 3 als Energiespeicher hinzugeschaltet werden. Jedoch lassen sich die Kennlinien beim Betrieb des Akkumulators 3 durch die unterschiedliche Betriebsweise (Antrieb oder regenerativer Betrieb) des hydraulischen Elements 2 sowie durch die unterschiedliche Betriebsweise (Antrieb oder regenerativer Betrieb) der elektrischen Maschine 1 im Diagramm verschieben.

So bewirkt der unterschiedliche Betrieb der Regelpumpe eine Verschiebung des Nullpunkts der Geschwindigkeitsachse für den Akkumulator. Ohne Betrieb der Pumpe ist die Akkumulatorkennlinie durch die Kennlinie 120 (Fig. 2) gekennzeichnet. Die Kennlinie nimmt aufgrund der Drosselverluste in den Hydraulikleitungen mit der Einspritzgeschwindigkeit v ab. Wird nun die Regelpumpe 40 als Antrieb zugeschaltet, so verschiebt sich die Kennlinie in dem Diagramm nach rechts (nunmehr Kennlinie 124 in Fig. 2). Wird die Regelpumpe als Hydromotor verwendet, so treibt Akkumulator zusätzlich das hydraulische Element an, wodurch sich die Kennlinie nach links verschiebt (Kennlinie 122 in Fig. 2). Im letzteren Fall wird die Hydraulikleistung des Akkumulators 3 nicht nur der Kolben-Zylinder-Einheit 2, sondern auch der nun als Hydromotor arbeitenden Regelpumpe 40 zur Verfügung gestellt.

In gleicher Weise verschiebt bei entsprechender Zuschaltung der elektrischen Maschine 1 die Kennlinie des Akkumulators 3 im Diagramm nach oben oder unten. Die Kraft des Elektromotors oder die Kraft der als Generator betriebenen elektrischen Maschine addieren oder subtrahieren sich mit der Kraft des Akkumulators auf den Kolben, so dass je nach Betriebsweise des Elektromotors die Akkumulatorkennlinie nicht verschoben ist (Fig. 3, Kennlinie 128), bei als Motor wirkender elektrischer Maschine nach oben verschoben ist (Fig. 3, Kennlinie 129) und bei als Generator wirkender elektrischer Maschine nach unten (Fig. 3, Kennlinie 126) verschoben ist. Insofern kann man die verschiedenen Lastpunkte je nach Kombination der Antriebe unterschiedlich abdecken.

Die Lastpunkte LP 2_1, LP 3_1 (Fig. 4) können nur bei einer maximalen Auslastung des Systems abgedeckt werden. Dies bedeutet, dass alle drei verfügbaren Teilantriebe gemeinsam eine Leistung erbringen und in das System einspeisen müssen. Dies bedeutet mit anderen Worten, dass die elektrische Maschine 1 als Elektromotor arbeitet, der Akkumulator 3 zur Beaufschlagung des Kolbens in die gleiche Richtung dient und das hydraulische Element als Regelpumpe 40 arbeitet (SL 1, SL 2, SL 3 in Fig. 4 sind als mögliche Systemleistungskennlinien abgebildet, in unterschiedlichen Betriebsarten der Komponenten).

Mit zunehmender Einspritzgeschwindigkeit steigen zwar auch unvermeidlich die Drosselverluste, was bedeutet, dass die Energieeffizienz sinkt. Allerdings sind diese vorgenannten Leistungsanforderungen mit Einzelsystemen in der Regel gar nicht oder nur schwer erbringbar.

Der Lastpunkt LP 2_2 kann nur mit Unterstützung durch den Akkumulator 3 abgedeckt werden. Um die Drosselverluste im Akkumulator jedoch möglichst gering zu halten, wird zusätzlich mit der als Elektromotor wirkenden elektrischen Maschine 1 eine Last aufgebracht, um den Lastdruck auf das maximal mögliche Niveau zu erhöhen (regenerativer Betrieb der elektrischen Maschine 1). Die dabei gewonnene elektrische Energie kann in einen Zwischenkreis zurückgespeist werden. Diese zurückgespeiste Energie könnte z.B. während des Einspritzvorgangs von der Regelpumpe für die Ladung des Speichers oder unmittelbar zum Antrieb weiterer am Zwischenkreis verbundener Maschinen verwendet werden oder auch ins Netz zurückgespeist werden. Die Drosselverluste bleiben bei dieser Vorgehensweise in diesem Arbeitspunkt gering. Die Verluste, die entstehen, entsprechen den Wirkungsgraden bei der jeweiligen Energieumformung.

Auch der Lastpunkt LP 3_3 liegt in einem Bereich des Diagramms, bei dem eine Unterstützung durch den Akkumulator 3 notwendig ist. Die Drosselverluste über die Ventile können über eine Regenerationsschaltung der Regelpumpe (nunmehr Hydromotorfunktion) minimiert werden.

Schließlich muss auch der Lastpunkt 3_2 mit Unterstützung des Akkumulators 3 abgedeckt werden. Zusätzlich ist ein Restanteil der angeforderten Leistung beispielsweise mit der als Elektromotor wirkenden elektrischen Maschine 1 aufzubringen. Dieser Anteil der Restleistung sollte wiederum nur so groß sein, dass die Drosselverluste über das Ventil minimal gehalten werden.

Mit der vorliegenden Erfindung und der vorbeschriebenen Vorgehensweise lässt sich ein Gesamtantrieb mit einer sehr hohen Energieeffizienz ausgestalten, bei dem die jeweiligen Stärken des jeweils agierenden Antriebsteils (Dynamik, Genauigkeit) ausgenutzt werden können. Insbesondere durch die regenerative Nutzung der elektrischen Maschine wie auch des hydraulischen Elements ist es möglich, die ansonsten beim Betrieb des Akkumulators verloren gehende Energie im System zu halten.

Insgesamt verbleibt dabei nur ein kleiner Bereich des Diagramms, der nicht ideal an ein gewünschtes Leistungsprofil (hier Energieeffizienz) angepasst werden kann.

Das System erlaubt überdies eine Modularität. So kann beispielsweise bei geringen Geschwindigkeitsanforderungen nur der Regelpumpenbetrieb direkt eingesetzt werden. Bei geringeren Drehmomentanforderungen mit hoher Geschwindigkeit kann dagegen das elektrische Antriebssystem genutzt werden. Bei hohen Spritzleistungen ist optional das Speichersystem mit dem Akkumulator dazuzuschalten.

Die Systeme können bei der Bestellung der Spritzgießmaschine zunächst nur einzeln verkauft werden (z.B. nur hydraulischer Antrieb). Jedoch ist eine Nachrüstbarkeit mit den anderen Teilantrieben möglich. Grundsätzlich kann das vorstehend beschriebene Konzept auch auf andere Antriebsachsen oder Antriebselemente erweitert werden. Hinsichtlich der Antriebsachsen könnte ein entsprechendes Konzept bei einer Spritzgießmaschine beispielsweise bei der Schließkraft, bei der Anpresskraft etc. eingesetzt werden.

### Bezugszeichenliste

- 1: Elektrische Maschine (Generator, Elektromotor)
- 2: Doppelwirkender Kolben-Zylinder-Einheit
- 3: Akkumulator
- 10: Erstes Ventil
- 20: Zweites Ventil
- 30: Drittes Ventil
- 40: Hydraulisches Element (Hydraulikpumpe; Hydromotor)
- 110: Mit Hydraulikpumpe unmittelbar abdeckbarer Lastbereich
- 112: Mit elektrischem Antrieb unmittelbar abdeckbarer Lastbereich
- 114: Mit Akkumulator oder zusätzlich mit Akkumulator abdeckbarer Lastbereich
- 116: Verschiebung der Nulllage der Geschwindigkeitsachse für das Speichersystem
- 118: Verschiebung der Nulllage der Kraftachse für das Speichersystem
- 120 bis 129: Verschiedene Kennlinien

## Patentansprüche

1. Verfahren zum Betrieb einer angetriebenen Achse bei einer Werkzeugmaschine, insbesondere bei einer Spritzgießmaschine, bei dem zumindest zwei unterschiedliche Antriebe mit verschiedenen technischen Ausprägungen und Eigenheiten zusammengeschaltet und zu einem gemeinsamen Wirkantrieb gekoppelt werden, **dadurch gekennzeichnet, dass**
- die Leistungsdaten für jeden der unterschiedlichen Antriebe in Kennwerten oder Kennlinien hinterlegt sind,
- ein Leistungsprofil für den Wirkantrieb vorgegeben wird,
- eine Leistungsanforderung für die angetriebene Achse ermittelt wird,
- auf Basis der Leistungsanforderung diejenige Betriebskombination der Antriebe aus den Leistungsdaten ermittelt wird, die das Leistungsprofil ergeben und
- die Antriebe mit der ermittelten Betriebskombination angetrieben werden.

2. Verfahren nach Anspruch 1,
**dadurch gekennzeichnet,**
**dass** ein Leistungsprofil mit möglichst geringen Energieverbrauch vorgegeben wird.

3. Verfahren nach Anspruch 2,
**dadurch gekennzeichnet,**
**dass** ein Leistungsprofil mit einer bestimmten Mindestdynamik bei einem geringen Energieverbrauch vorgegeben wird.

4. Verfahren nach einem der vorhergehenden Ansprüche,
**dadurch gekennzeichnet,**
**dass** zumindest ein Antrieb durch eine elektrische Maschine (1) gebildet ist, welche je nach Anforderung sowohl als Antriebsmotor wie auch als Generator betrieben wird.

5. Verfahren nach Anspruch 4,
**dadurch gekennzeichnet,**
**dass** beim Betrieb der elektrischen Maschine (1) als Generator elektrische Energie erzeugt und in ein System zurückgespeist wird.

6. Verfahren nach einem der Ansprüche 1 bis 5,
**dadurch gekennzeichnet,**
**dass** zumindest ein Antrieb ein hydraulisches Element (40) umfasst, welches je nach Anforderung als angetriebene Pumpe oder als Hydromotor betrieben und von einem Ventil (30) angesteuert wird.

7. Verfahren nach Anspruch 6,
**dadurch gekennzeichnet,**
**dass** der als hydraulisches Element betriebene Hydromotor (40) eine weitere elektrische Maschine als Generator antreibt, welche elektrische Energie erzeugt und in das System zurückspeist.

8. Vorrichtung zum Betrieb einer angetriebenen Achse bei einer Werkzeugmaschine, insbesondere bei einer Spritzgießmaschine, Umfassend zumindest zwei unterschiedliche Antriebe mit verschiedenen technischen Ausprägungen und Eigenheiten, die zusammengeschaltet und zu einem gemeinsamen Wirkantrieb gekoppelt sind, und eine Steuer-oder Regeleinrichtung
**dadurch gekennzeichnet, dass**
- die Leistungsdaten für jeden der unterschiedlichen Antriebe in Kennwerten oder Kennlinien auf der Steuer-oder Regeleinrichtung hinterlegt sind,
- die Steuer- oder Regeleinrichtung mit den unterschiedlichen Antrieben zu deren Ansteuerung verbunden ist,
- ein Leistungsprofil vorgebbar ist und
- die Steuer- oder Regeleinrichtung ausgebildet ist,
-- zum Ermitteln der Leistungsanforderung für die angetriebene Achse und
-- zum Ermitteln derjenigen Betriebskombination der gekoppelten Antriebe auf Basis der Leistungsanforderung, die das vorgegebene Leistungsprofil ergeben
und
- die Antriebe mit der ermittelten Betriebskombination antreibbar sind.

9. Vorrichtung nach Anspruch 8,
**dadurch gekennzeichnet,**
**dass** zumindest ein Antrieb einen Hydraulik-Akkumulator (3) umfasst, der von einem Ventil (20) angesteuert ist

10. Vorrichtung nach Anspruch 9,
**dadurch gekennzeichnet,**
**dass** zumindest ein Antrieb eine elektrische Maschine (1) umfasst, die ausgebildet ist, um sowohl als Motor wie auch als Generator zu wirken.

11. Vorrichtung nach Anspruch 10
**dadurch gekennzeichnet,**
**dass** die elektrische Maschine (1) und deren Komponenten ausgebildet sind, um elektrische Energie in ein System zurückzuspeisen.

12. Vorrichtung nach einem der Ansprüche 9 bis 11,
**dadurch gekennzeichnet,**
**dass** zumindest ein Antrieb ein hydraulisches Element (40) umfasst, welches ausgebildet ist, um je nach Anforderung als angetriebene Pumpe oder als Hydromotor betrieben zu werden.

13. Vorrichtung nach Anspruch 12,
**dadurch gekennzeichnet,**
**dass** das hydraulische Element (40) mit einer weiteren elektrischen Maschinen gekoppelt ist.

14. Vorrichtung nach Anspruch 13,
**dadurch gekennzeichnet,**
**dass** die weitere elektrische Maschine und deren Komponenten ausgebildet sind, um elektrische Energie in das System zurückzuspeisen.

## Claims

1. A method for operating a driven spindle in a machine tool, particularly in an injection moulding machine, wherein at least two different drives with different technical specifications and characteristics are interconnected and coupled to form a common effective drive,
**characterized in that**
- the performance data for each of the different drives are recorded in characteristic values or characteristic curves,
- a performance profile for the effective drive is specified,
- a performance requirement for the driven spindle is determined,
- the operational combination of the drives that results in the performance profile is determined from the performance data based on the performance requirement, and
- the drives are operated with the determined operational combination.

2. The method according to claim 1,
**characterized in**
**that** a performance profile with as low an energy consumption as possible is specified.

3. The method according to claim 2,
**characterized in**
**that** a performance profile with a low energy consumption with certain minimum dynamics is specified.

4. The method according to one of the preceding claims,
**characterized in**
**that** at least one drive is formed by an electric machine (1) that is operated both as a driving motor and also as a generator, according to requirements.

5. The method according to claim 4,
**characterized in**
**that** electric energy is generated and fed back into a system when the electric machine (1) operates as a generator.

6. The method according to one of claims 1 to 5,
**characterized in**
**that** at least one drive comprises a hydraulic element (40) that is operated as a driven pump or as a hydraulic motor according to requirements and is actuated by a valve (30).

7. The method according to claim 6,
**characterized in**
**that** the hydraulic motor (40) operated as a hydraulic element drives a further electric machine as a generator that generates electric energy and feeds it back into the system.

8. A device for operating a driven spindle in a machine tool, particularly in an injection moulding machine, comprising at least two different drives with different technical specifications and characteristics that are interconnected and coupled to form a common effective drive, and a control- or regulating device,
**characterized in that**
- the performance data for each of the different drives is stored in the form of characteristic values or characteristic curves on the control- or regulating device,
- the control- or regulating device is connected to the different drives in order to realize their actuation,
- a performance profile can be specified and
- the control- or regulating device is designed
-- for determining the performance requirement for the driven spindle and
-- for determining the operational combination of the coupled drives that results in the specified performance profile based on the performance requirement, and
- the drives can be operated with the determined operational combination.

9. The device according to claim 8,
**characterized in**
**that** at least one drive comprises a hydraulic accumulator (3) that is actuated by a valve (20).

10. The device according to claim 9,
**characterized in**
**that** at least one drive comprises an electric machine (1) that is designed for operating both as a motor and also as a generator.

11. The device according to claim 10,
**characterized in**
**that** the electric machine (1) and its components are designed for feeding electric energy back into a system.

12. The device according to one of claims 9 to 11,
**characterized in**
**that** at least one drive comprises a hydraulic element (40) that is designed for being operated as a driven pump or as a hydraulic motor according to requirements.

13. The device according to claim 12,
**characterized in**
**that** the hydraulic element (40) is coupled to a further electric machine.

14. The device according to claim 13,
**characterized in**
**that** the further electric machine and its components are designed for feeding electric energy back into the system.

## Revendications

1. Procédé pour le fonctionnement d'un axe entraîné dans une machine-outil, en particulier dans une machine de moulage par injection, dans lequel au moins deux entraînements différents de classes et de singularités techniques différentes sont couplés ensemble et à un entraînement actif commun,
**caractérisé en ce que**
- les données de puissance pour chacun des différents entraînements sont consignées sous forme de valeurs caractéristiques ou de courbes caractéristiques,
- un profil de puissance est prédéfini pour l'entraînement actif,
- une demande de puissance est calculée pour l'axe entraîné,
- sur la base de la demande de puissance, la combinaison de fonctionnement des entraînements est calculée à partir des données de puissance, qui fournissent le profil de puissance et
- les entraînements sont entraînés avec la combinaison de fonctionnement calculée.

2. Procédé selon la revendication 1,
**caractérisé en ce**
**qu'**un profil de puissance avec une consommation d'énergie la plus faible possible est prédéfini.

3. Procédé selon la revendication 2,
**caractérisé en ce**
**qu'**un profil de puissance avec une dynamique minimale déterminée pour une consommation d'énergie faible est prédéfini.

4. Procédé selon l'une des revendications précédentes,
**caractérisé en ce**
**qu'**au moins un entraînement est formé par une machine électrique (1) qui est utilisée aussi bien en tant que moteur d'entraînement qu'en tant que générateur en fonction de la demande.

5. Procédé selon la revendication 4,
**caractérisé en ce**
**que** lors du fonctionnement de la machine électrique (1) en tant que générateur, de l'énergie électrique est produite et réinjectée dans un système.

6. Procédé selon l'une des revendications 1 à 5,
**caractérisé en ce**
**qu'**au moins un entraînement comprend un élément hydraulique (40) qui est utilisé en tant que pompe entraînée ou en tant que moteur hydraulique en fonction de la demande et est commandé par une soupape (30).

7. Procédé selon la revendication 6,
**caractérisé en ce**
**que** le moteur hydraulique utilisé en tant qu'élément hydraulique (40) entraîne une machine électrique supplémentaire en tant que générateur, laquelle produit de l'énergie électrique et la réinjecte dans le système.

8. Dispositif pour le fonctionnement d'un axe entraîné dans une machine-outil, en particulier dans une machine de moulage par injection, comprenant au moins deux entraînements différents de classes et de singularités techniques différentes qui sont couplés ensemble et à un entraînement actif commun, et un dispositif de commande ou de réglage,
**caractérisé en ce que**
- les données de puissance pour chacun des différents entraînements sont consignées sous forme de valeurs caractéristiques ou de courbes caractéristiques sur le dispositif de commande ou de réglage,
- le dispositif de commande ou de réglage est relié aux différents entraînements pour les commander,
- un profil de puissance peut être prédéfini, et
- le dispositif de commande ou de réglage est formé,
-- pour calculer la demande de puissance pour l'axe entraîné et
-- pour calculer la combinaison de fonctionnement des entraînements couplés sur la base de la demande de puissance qui fournit le profil de puissance prédéfini, et
- les entraînements peuvent être entraînés avec la combinaison de fonctionnement calculée.

9. Dispositif selon la revendication 8,
**caractérisé en ce**
**qu'**au moins un entraînement comprend un accumulateur hydraulique (3) qui est commandé par une soupape (20).

10. Dispositif selon la revendication 9,#
**caractérisé en ce**
**qu'**au moins un entraînement comprend une machine électrique (1) qui est formée pour agir aussi bien en tant que moteur qu'en tant que générateur.

11. Dispositif selon la revendication 10,
**caractérisé en ce**
**que** la machine électrique (1) et ses composantes sont conçues pour réinjecter de l'énergie électrique dans un système.

12. Dispositif selon l'une des revendications 9 à 11,
**caractérisé en ce**
**qu'**au moins un entraînement comprend un élément hydraulique (40) qui est conçu pour être utilisé en tant que pompe entraînée ou en tant que moteur hydraulique selon la demande.

13. Dispositif selon la revendication 12,
**caractérisé en ce**
**que** l'élément hydraulique (40) est couplé à une machine électrique supplémentaire.

14. Dispositif selon la revendication 13,
**caractérisé en ce**
**que** la machine électrique supplémentaire et ses composantes sont conçues pour réinjecter de l'énergie électrique dans le système.
